Europäisches Patentamt

European Patent Office

Office européen des brevets

(11) Veröffentlichungsnummer: **0 309 753**
**A1**

## EUROPÄISCHE PATENTANMELDUNG

(21) Anmeldenummer: 88114210.3

(22) Anmeldetag: 31.08.88

(51) Int. Cl.⁴: **F02D 41/20 , F02D 41/22 , H01H 47/32 , H03K 17/64**

(30) Priorität: 30.09.87 DE 3733089

(43) Veröffentlichungstag der Anmeldung:
05.04.89 Patentblatt 89/14

(84) Benannte Vertragsstaaten:
**DE ES FR GB IT**

(71) Anmelder: **Siemens Aktiengesellschaft Berlin und München**
**Wittelsbacherplatz 2**
**D-8000 München 2(DE)**

(72) Erfinder: **Glehr, Manfred, Dipl.-Ing.**
**Gartenstrasse 8**
**D-8330 Eppenfelden(DE)**

(54) **Verfahren zur Überwachung einer induktiven Last.**

(57) Bei einem Verfahren zur Überwachung einer induktiven Last ist mit dieser ein Meßwiderstand (M) in Reihe geschaltet. Der Strom in dem Meßwiderstand (M) wird bei jedem Einschalten der induktiven Last, kurz nach dem Einschalten und kurz nach dem Zeitpunkt, an dem bei einer intakten Schaltung ein Bezugswert (IB1, IB2) erreicht wird, mit diesem Bezugswert (IB1, IB2) verglichen. Der Bezugswert (IB1, IB2) ist so gewählt, daß er bei einer intakten Schaltung bei der ersten Abfrage größer und bei der zweiten Abfrage kleiner oder gleich dem Strom ist. Ist dies nicht der Fall, so liegt ein Fehler vor.

## FIG 1

## Verfahren zur Überwachung einer induktiven Last

Die Erfindung betrifft ein Verfahren zur Überwachung einer induktiven Last gemäß Oberbegriff von Anspruch 1.

Ein solches Verfahren ist z.B. aus der DE-PS 30 15 939 bekannt. Der Vergleich des Stroms mit dem Bezugswert wird dabei durch einen Operationsverstärker bewirkt, indem dieser den durch den Stromfluß bedingten Spannungsabfall über den Meßwiderstand mit einem entsprechenden Bezugswert vergleicht. Übersteigt dieser Spannungsabfall den Bezugswert, so erzeugt der Operationsverstärker ein negatives Ausgangssignal. Dieses vermindert den Strom in der Basis eines Schalttransistors und begrenzt so den in dem Lastkreis fließenden Strom.

Im wesentlichen können in einem derartigen Lastkreis folgende Fehlerfälle auftreten:
- Kurzschluß des Schalters
- Kurzschluß der Spule
- kein oder zu wenig Stromfluß im Lastkreis nach Schließen des Schalters.

Mit einem Verfahren gemäß dem Stand der Technik sind die Kurzschlußfälle, die einen hohen Überstrom hervorrufen, beherrschbar. Die durch keinen oder zu wenig Stromfluß bedingten Fehlerfälle sind damit nicht erkennbar.

Der Erfindung liegt daher die Aufgabe zugrunde, eine solche Schutzeinrichtung derart weiterzubilden, daß auch diese Fehlerfälle erkennbar sind.

Die erfindungsgemäße Lösung ist in Anspruch 1 gekennzeichnet. Vorteilhafte Ausgestaltungen der Erfindung sind in den Unteransprüchen gekennzeichnet.

Die Erfindung basiert auf der Überlegung, daß in einem intakten Lastkreis der Strom nach Einschalten des Schalters von 0 beginnend kontinuierlich bis zum Erreichen des Maximalwerts ansteigt. Erfindungsgemäß wird deshalb der Spannungsabfall an einem Meßwiderstand an zwei Abfragezeitpunkten mit einem Bezugswert verglichen. Die Abfragezeitpunkte sind bezogen auf ein Bezugsintervall, das mit einem Einschaltzeitpunkt des Schalters beginnt und mit dem Erreichen des Bezugswerts - bei intakter Schaltung - endet. Der erste Abfragezeitpunkt liegt dabei vor dem Zeitpunkt, an dem bei einer intakten Schaltung der Bezugswert erreicht wird. Der Spannungsabfall muß dabei kleiner sein als der Bezugswert. Dieser erste Abfragezeitpunkt und der Bezugswert sind so gewählt, daß bei einem Kurzschluß im Lastkreis der Spannungsabfall den Bezugswert bereits vor dem ersten Abfragezeitpunkt erreicht hat. Damit ist der Spannungsabfall am ersten Abfragezeitpunkt größer als der Bezugswert und es wird ein Fehlersignal erzeugt.

Der zweite Abfragezeitpunkt liegt an oder nach dem Zeitpunkt, an dem der Bezugswert erreicht wird. Der Spannungsabfall muß dann bei einer intakten Schaltung mindestens gleich oder größer sein als der Bezugswert. Ist dies nicht der Fall, so wird wiederum ein Fehlersignal erzeugt.

Die Erfindung wird anhand der Figuren näher erläutert; es zeigen:

FIG 1 ein Prinzipschaltbild einer ersten Schutzeinrichtung nach dem erfindungsgemäßen Verfahren,

FIG 2 Signaldiagramme zur Veranschaulichung der Funktion der Schutzeinrichtung gemäß FIG 1,

FIG 3 ein Prinzipschaltbild einer weiteren Schutzeinrichtung nach dem erfindungsgemäßen Verfahren,

FIG 4 Signaldiagramme zur Veranschaulichung der Funktion der Schutzeinrichtung gemäß FIG 3.

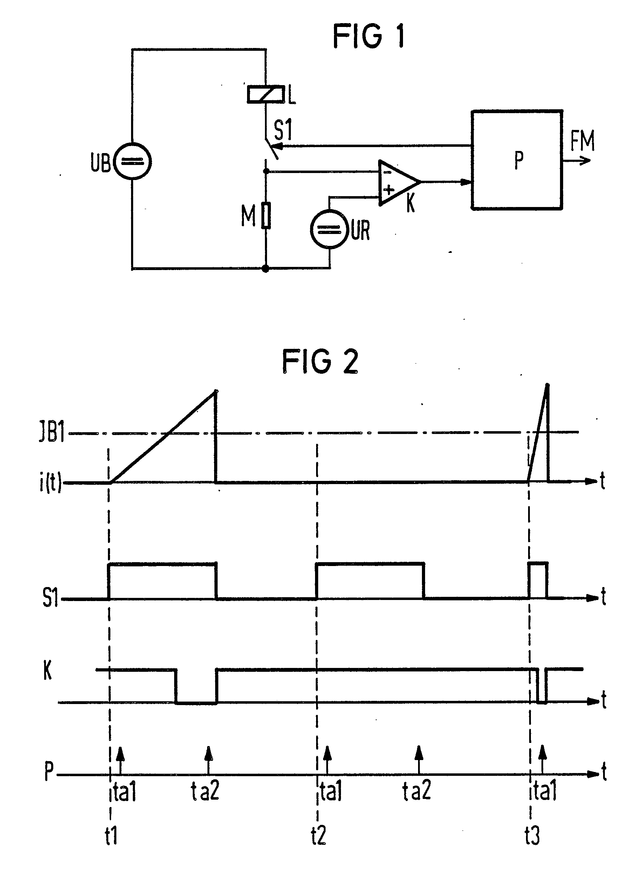

FIG 1 zeigt einen Lastkreis mit einer Spannungsquelle UB, einer Spule L, einem Schalter S1 und einem Meßwiderstand M. Die Spule L ist eine beliebige induktive Last, z.B. eine Zündendstufe, ein Einspritzventil, ein Relais oder dergleichen. Der Schalter S1 ist ein beliebiger Halbleiterschalter.

Zwischen dem Schalter S1 und dem Meßwiderstand M ist ein Abgriff mit einem Eingang eines Komparators K verbunden. Am anderen Eingang des Komparators K ist eine Referenzspannungsquelle UR für einen Bezugswert IB1 angeschlossen. Der Bezugswert IB1, der durch die Höhe der Referenzspannung bestimmt ist, ist auf 85 % des aufgabengemäßen Maximalwerts des Stroms eingestellt. Dieser Wert ist ein aus der Erfahrung gewonnener Kompromiß. Einerseits darf der Bezugswert IB1 nicht zu tief liegen, da er sonst immer erreicht wird, auch wenn der Strom i(t) durch Fehler in der Schaltung weit unter dem aufgabengemäßen Maximalwert bleibt. Andererseits darf er nicht zu hoch liegen, so daß er auch unter Berücksichtigung erlaubter Toleranzen noch sicher erreicht wird.

Der Komparator K ist ein Operationsverstärker, der ein positives Ausgangssignal abgibt, solange der Spannungsabfall über den Meßwiderstand M kleiner ist als die Referenzspannung. Wird er dagegen größer als die Referenzspannung, so gibt der Operationsverstärker ein negatives Ausgangssignal ab. Der Ausgang des Operationsverstärkers ist an einem Eingang eines Mikroprozessors P angeschlossen, über den dieser den Schaltzustand des Operationsverstärkers abfragt. Der Mikroprozessor P übernimmt auch die Ansteuerung des Schalters S1 und ist dazu über einen seiner Ausgänge mit diesem verbunden.

Die Funktion der Schutzeinrichtung wird anhand der in FIG 2 dargestellten Signalverläufe erläutert: Die einzelnen Signale sind dabei über der mit t bezeichneten Zeit dargestellt. An den mit t1, t2 und t3 bezeichneten Einschaltzeitpunkten schaltet der Mikroprozessor P den Schalter S1 jeweils für einen bestimmten Zeitraum ein, wie der Signalverlauf für den Schalter S1 zeigt. Der Strom im Lastkreis i(t) steigt dann kontinuierlich an, bis ein durch die Schaltungsdimensionierung gegebener Maximalwert erreicht ist oder bis der Schalter S1 wieder ausgeschaltet wird. Am Ausgang des Komparators K liegt dabei solange ein positives Ausgangssignal bis der Strom i(t) den Bezugswert IB1 übersteigt. Solange der Strom i(t) über diesem Bezugswert IB1 bleibt, liegt am Ausgang des Komparators K ein negatives Signal.

Der Mikroprozessor P fragt dieses Ausgangssignal des Komparators K an den beiden Abfragezeitpunkten ta1 und ta2 ab. Der Abfragezeitpunkt ta1 liegt ungefähr 80 bis 120 μsec nach dem Einschalten des Schalters S1, damit störende Einschwingvorgänge bereits abgeklungen sind. Der Abfragezeitpunkt ta2 liegt ungefähr 80 bis 120 μsec vor Erreichen des aufgabengemäßen Maximalwerts des Stroms. Dieser Zeitpunkt des Erreichens des aufgabengemäßen Maximalwerts bestimmt sich aus der Dimensionierung der einzelnen verwendeten Schaltelemente.

Der Mikroprozessor prüft nun, ob das Ausgangssignal des Komparators K beim Abfragezeitpunkt ta1 positiv ist und beim Abfragezeitpunkt ta2 negativ. Ist dies nicht der Fall, gibt er eine Fehlermeldung FM aus.

In der FIG 2 ist für den Einschaltzeitpunkt t2 ein erster Fehlerfall dargestellt. Der Strom i(t) bleibt 0, da eine Unterbrechung im Lastkreis vorliegt, der Schalter S1 trotz Schließbefehl offen bleibt oder die Spannungsquelle UB defekt ist. In diesem Fall stellt der Mikroprozessor P am Abfragezeitpunkt ta2 fest, daß das Signal vom Komparator K positiv ist - also der Bezugswert IB1 nicht erreicht wurde - und gibt eine dementsprechende Fehlermeldung FM aus.

Die Prüfung am Abfragezeitpunkt ta2 deckt auch einen weiteren möglichen Fehler auf. Treten z.B. in der Schaltung durch Alterung oder sonstige äußere Einflüsse bedingte erhöhte Übergangswiderstände an einzelnen Bauelementen auf, so wird der Maximalwert des Stroms nicht mehr erreicht. Damit wird aber auch der Bezugswert IB1 nicht mehr erreicht und der Fehler erkannt.

Ein anderer Fehler ist ab dem Einschaltzeitpunkt t3 in FIG 2 dargestellt. Der Strom i(t) steigt, bedingt durch einen Kurzschluß im Lastkreis, schlagartig auf einen unzulässig hohen Wert. Der Mikroprozessor P stellt am Abfragezeitpunkt ta1 fest, daß das Ausgangssignal des Komparators K negativ ist - also der Bezugswert IB1 überschritten wurde -, gibt eine Fehlermeldung FM aus und unterbricht den Stromfluß durch Öffnen des Schalters S1.

Durch diese Prüfung am Abfragezeitpunkt ta1 ist noch ein weiterer Fehler erkennbar. Bleibt der Schalter S1 dauernd geschlossen, so ist ebenfalls der Bezugswert IB1 bereits am Abfragezeitpunkt ta1 überschritten und der Mikroprozessor P kann den Fehler erkennen.

Die Erfindung ist ebenfalls anwendbar für mehrere gleiche induktive Lasten, die gleichzeitig oder nicht zeitlich überlappend eingeschaltet werden. Diese können dann einen gemeinsamen Schalter S1, Meßwiderstand M und Komparator K haben. Wenn dies nicht der Fall ist, muß für jede induktive Last eine eigene erfindungsgemäße Schutzeinrichtung vorgesehen sein.

Ein zweites Ausführungsbeispiel zeigt das Verfahren zur Überwachung einer induktiven Last, deren Stromaufnahme durch eine Strombegrenzung bzw. Regelung begrenzt ist.

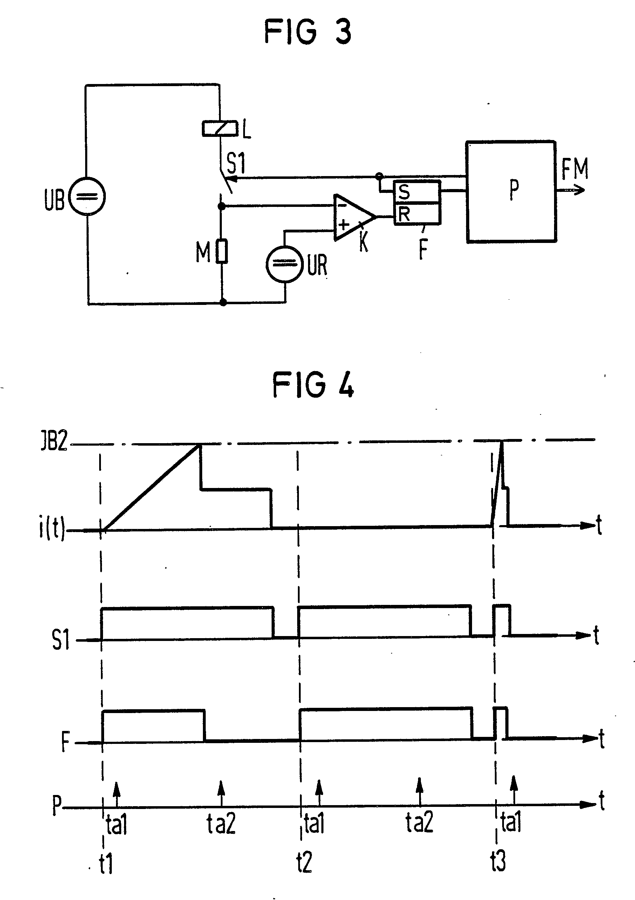

Das Prinzipschaltbild der FIG 3 entspricht dem aus FIG 1 mit Ausnahme eines zusätzlichen bistabilen RS-Kippglieds. Dessen Setzeingang S ist mit dem Ausgang des Mikroprozessors P verbunden, über den der Schalter S1 angesteuert wird. Der Rücksetz eingang R ist an den Ausgang des Komparators K angeschlossen. Der Ausgang des Kippglieds F liegt schließlich an dem Eingang des Mikroprozessors P.

Die Funktion der Schutzeinrichtung gemäß FIG 3 wird anhand der in FIG 4 dargestellten Signalverläufe erläutert. Analog FIG 2 schaltet der Mikroprozessor P den Schalter S1 an den Einschaltzeitpunkten t1, t2 und t3 für einen bestimmten Zeitraum ein. Ab dem Einschaltzeitpunkt t1 steigt der Strom i(t) kontinuierlich an, bis er einen Bezugswert IB2 erreicht. Ab diesem Zeitpunkt wird er von einer in FIG 3 nicht dargestellten Steuereinrichtung auf einen niedrigeren konstanten Wert eingeregelt, bis er durch das Abschalten des Lastkreises über den Schalter S1 wieder zu Null wird. Eine solche Stromregelung für ein Einspritzventil eines Kraftfahrzeugs ist z.B. in der gleichzeitig eingereichten Patentanmeldung "Verfahren und Anordnung zum Einstellen des Laststroms durch eine induktive Last", Erf. M. Glehr, beschrieben.

Bei jedem Einschalten des Schalters S1 über den Ausgang des Mikroprozessors P wird nun das Kippglied F über dessen Setzeingang S auf 1 gesetzt. Erreicht der Strom i(t) den Bezugswert IB2, so erscheint am Ausgang des Komparators K ein Signal, das das Kippglied F über den Rücksetzeingang R zurücksetzt. Am Ausgang des Kippglieds F erscheint daher ein Signal, solange der Strom i(t) den Bezugswert IB2 noch nicht erreicht hat. Bei Erreichen des Bezugswerts IB2 verschwindet dieses Signal.

Dieses Ausgangssignal des Kippglieds F fragt der Mikroprozessor P an den beiden Abfragezeitpunkten ta1 und ta2 ab. Der Abfragezeitpunkt ta1 liegt analog dem zu FIG 2 Gesagten ungefähr 80 bis 120 μsec nach dem Einschalten des Schalters S1. Der Abfragezeitpunkt ta2 liegt hier kurz nach dem Ende des Bezugsintervalles, also nach dem Erreichen des aufgabengemäßen Maximalwerts des Stroms, da dieser den Bezugswert IB2 nicht übersteigen kann. Daß dieser Bezugswert IB2 jedoch erreicht wurde ist daran ersichtlich, daß das Kippglied F beim Abfragezeitpunkt ta2 zurückgesetzt sein muß.

Der Zeitpunkt des Erreichens des Maximalwerts des Stroms ist wie im ersten Ausführungsbeispiel aus der Dimensionierung der verwendeten Bauteile berechnet. Dieser Zeitpunkt kann sich auch ändern, z.B. wenn die Spannung der Spannungsquelle UB nicht immer gleich ist. In diesem Fall kann eine hier nicht dargestellte Überwachungseinrichtung für die von der Spannungsquelle UB gelieferte Spannung vorgesehen sein. Bei Abweichungen von UB vom Sollwert wird der Zeitpunkt neu berechnet oder aus einem entsprechenden Kennfeld ausgelesen.

Ab dem Einschaltzeitpunkt t2 ist in FIG 4 wieder der Fehlerfall - kein oder zu wenig Strom - dargestellt. Der Mikroprozessor P erkennt den Fehler am Abfragezeitpunkt ta2, da das Kippglied F nicht rückgesetzt wurde und gibt eine Fehlermeldung FM aus.

Ab dem Einschaltzeitpunkt t3 ist der Fehlerfall - Kurzschluß -dargestellt. Der Mikroprozessor P erkennt diesen Fehler am Abfragezeitpunkt ta1, da das Kippglied F bedingt durch das schnelle Erreichen des Bezugswerts IB2 bereits rückgesetzt ist. In diesem Fall gibt der Mikroprozessor P wieder eine Fehlermeldung FM aus und schaltet den Kurzschluß durch Öffnen des Schalters S1 ab.

Auch dieses Ausführungsbeispiel des erfindungsgemäßen Verfahrens ist für mehrere gleiche induktive Lasten, die gleichzeitig oder nicht zeitlich überlappend eingeschaltet werden, geeignet.

**Ansprüche**

1. Verfahren zur Überwachung einer induktiven Last in einem Lastkreis, mit einer Spannungsquelle (UB), einem Schalter (S1) und einem Meßwiderstand (M), in Serienschaltung, in dem der Strom mit einem Bezugswert (IB1, IB2) verglichen wird, **dadurch gekennzeichnet,** daß nach jedem Einschalten des Schalters (S1)
- an einem ersten Abfragezeitpunkt (ta1), der vor dem Endpunkt eines Bezugsintervalls liegt, das mit einem Einschaltzeitpunkt (t1, t2, t3) des Schalters (S1) beginnt und mit dem Erreichen des Bezugswerts bei intaktem Lastkreis endet und
- an einem zweiten Abfragezeitpunkt (ta2), der nach dem Endpunkt liegt,
der Strom mit dem Bezugswert (IB1, IB2) verglichen wird, und daß ein Fehlersignal erzeugt wird, wenn der Strom beim ersten Abfragezeitpunkt (ta1) nicht kleiner ist als der Bezugswert (IB1, IB2) und beim zweiten Abfragezeitpunkt (ta2) nicht wenigstens den Bezugswert (IB1, IB2) erreicht hat.

2. Verfahren nach Anspruch 1, **dadurch gekennzeichnet,** daß der erste Abfragezeitpunkt (ta1) und der Bezugswert (IB1, IB2) so gewählt sind, daß der Strom bei einem Kurzschluß im Lastkreis den Bezugswert (IB1, IB2) beim ersten Abfragezeitpunkt (ta1) mit Sicherheit erreicht hat.

3. Verfahren nach Anspruch 2, **dadurch gekennzeichnet,** daß der Bezugswert (IB1, IB2) des Stromes kleiner als der im normalen Betrieb erreichbare Maximalwert ist und der zweite Abfragezeitpunkt (ta2) zwischen den Zeitpunkten liegt, an denen der Strom den Bezugswert (IB1, IB2) bzw. den Maximalwert erreicht.

4. Verfahren nach Anspruch 2, **dadurch gekennzeichnet,** daß der Bezugswert (IB1, IB2) gleich ist dem Maximalwert, den der Strom im Normalbetrieb erreicht, und daß der zweite Abfragezeitpunkt (ta2) nach dem diesem Maximalwert zugeordneten Zeitpunkt liegt oder mit diesem zusammenfällt.

# FIG 1

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 589 401 (KARIM et al.) <br> * Figuren 1,6; Spalte 2, Zeilen 14-57 * <br> --- | 1,2,4 | F 02 D 41/20 <br> F 02 D 41/12 <br> H 01 H 47/32 <br> H 03 K 17/64 |
| X | GB-A-2 155 208 (LUCAS) <br> * Figur 1; Seite 1, Zeilen 12-19,41-73; Seite 1, Zeile 125 - Seite 2, Zeile 57 * <br> --- | 1,2,4 | |
| A | EP-A-0 106 743 (BENDIX) <br> * Seite 2, Zeile 30 - Seite 3, Zeile 5; Seite 5, Zeilen 9-22; Seite 12, Zeile 32 - Seite 13, Zeile 34; Figuren 4,7 * <br> ----- | 1-3 | |

| | | | RECHERCHIERTE SACHGEBIETE (Int. Cl.4) |
|---|---|---|---|
| | | | F 02 D <br> H 01 H <br> H 03 K |

Der vorliegende Recherchenbericht wurde für alle Patentansprüche erstellt

| Recherchenort | Abschlußdatum der Recherche | Prüfer |
|---|---|---|
| DEN HAAG | 30-11-1988 | LAPEYRONNIE P.J.F. |

EPO FORM 1503 03.82 (P0403)